# EUROPÄISCHE PATENTSCHRIFT

(11) **EP 1 905 996 B1**
(45) Veröffentlichungstag und Bekanntmachung des Hinweises auf die Patenterteilung: **05.01.2011**
(21) Anmeldenummer: 06121267.6
(22) Anmeldetag: 26.09.2006
(51) Int. Cl.: F02F 3/00

(54) **Verfahren zum Herstellen eines Kolbens für Verbrennungsmotoren und Kolben für einen Verbrennungsmotor**
Method to produce and piston for internal combustion engine
Méthode de production et piston pour moteur à combustion interne

(43) Veröffentlichungstag der Anmeldung: 02.04.2008
(73) Patentinhaber: ThyssenKrupp Metalúrgica Campo Limpo Ltda., 13231-0900 Campo Limpo Paulista-SP (BR)
(72) Erfinder: Garcia, João Lester, 12.214-296, Junidiaí-SP (BR); Furquim, Heraldo Carlos, 13.216-300, Jundiaí-SP (BR)
(74) Vertreter: Cohausz & Florack

(56) Entgegenhaltungen:
- DE-C- 725 761
- GB-A- 2 080 485
- JP-A- 3 267 552
- JP-A- 54 021 945
- US-A1- 3 075 817

## Beschreibung

Die Erfindung betrifft ein Verfahren zum Herstellen eines Kolbens für Verbrennungsmotoren aus zwei vorgefertigten Teilen, die nach ihrer Vorfertigung miteinander zu dem Kolben verbunden werden. Darüber hinaus betrifft die Erfindung einen in entsprechender Weise aus zwei Teilen hergestellten Kolben.

Kolben für Verbrennungsmotoren werden üblicherweise mittels Guss- oder Schmiedeverfahren hergestellt. Die gießtechnische Erzeugung hat den Vorteil, dass sie die Herstellung komplex geformter Kolben von geringem Gewicht erlaubt. Allerdings muss dazu ein erheblicher Fertigungsaufwand in Kauf genommen werden. Dies gilt insbesondere dann, wenn für die Herstellung von besonders hoch belastbaren Kolben als Werkstoff ein Stahlmaterial verwendet werden soll.

Geschmiedete Kolben aus Stahl können in Abhängigkeit von ihrer Größe und ihrem Anwendungszweck sowohl einteilig ausgebildet sein als auch aus zwei oder mehreren Teilen bestehen. Bei mehrteiligen, aus zwei oder mehreren Teilen zusammengesetzten Kolben werden die einzelnen Teile üblicherweise durch geeignete Fügeverfahren kraft-, stoff- bzw. formschlüssig so miteinander verbunden, dass sie den im praktischen Einsatz auf sie wirkenden Kräften standhalten. Zu diesem Zweck eignen sich beispielsweise ein Verschweißen oder ein Verschrauben der Einzelteile des Kolbens.

Ein Beispiel für einen mehrteiligen Kolben für einen Verbrennungsmotor ist aus der DE 102 44 513 A1 bekannt. Dieser Kolben weist zum einen ein aus Stahl geschmiedetes Kolbenbodenteil auf, in den eine Verbrennungsmulde, eine Ringwand und ein nach Art einer Hohlkehle ausgebildeter Kühlkanal eingeformt sind. Zum anderen besitzt der Kolben ein Kolbenschaftteil, das das Kolbenbodenteil trägt und in dem Naben zur Aufnahme eines den Kolben mit einem Pleuel verbindenden Kolbenbolzens ausgebildet sind. Zur Herstellung dieses Kolbens werden das Kolbenbodenteil und das Kolbenschaftteil in getrennten Arbeitsgängen durch Schmieden vorgeformt und anschließend spanabhebend fertig bearbeitet. Die Fertigbearbeitung des Kolbenbodenteils umfasst dabei auch die spanabhebende Bearbeitung der den Kühlkanal begrenzenden Wandabschnitte, über die anschließend eine durch Verschweißen oder Verlöten stoffschlüssige Verbindung zum Kolbenschaftteil hergestellt wird.

Ein derartiger mehrteiliger Aufbau ermöglicht zwar eine komplexe Formgebung des aus den zwei Teilen gebildeten Kolbens. Abgesehen von den sich aus der Mehrteiligkeit hinsichtlich der Belastbarkeit ergebenden Problemen ist der damit verbundene Fertigungsaufwand jedoch erheblich.

Nachteilig an der Herstellung einstückiger Kolben sind das hohe Gewicht des Kolbenrohlings, aufgrund dessen besonders stark dimensionierte Verarbeitungs- und Handlingeinrichtungen benötigt werden, sowie der mit der in der heutigen Praxis unvermeidbar erforderlichen mechanischen Nachbearbeitung verbundene Aufwand. Diese Nachteile führen trotz der hinsichtlich ihrer Belastbarkeit gegebenen Vorteile von einstückigen Kolben dazu, dass bei konventioneller Herstellweise sich einstückige Kolben nur zu erhöhten Herstellkosten erzeugen lassen.

Eine erste Möglichkeit, einen Kolben aus zwei vorgefertigten Teilen schmiedetechnisch miteinander zu verbinden, ist aus der JP 03-267552 A bekannt. Bei diesem Stand der Technik wird durch Sintern eines Metallpulvers ein Kolbenschaft-Rohteil erzeugt, das eine zylindrische Grundform aufweist. An der Stirnfläche des Kolbenschaft-Rohteils ist dabei ein Vorsprung gebildet, der eine kreisrunde, scheibenartige Form besitzt. Zusätzlich zu dem Kolbenschaft-Teil wird ein Kolbenbodenteil gefertigt, das ebenfalls eine scheibenartige Grundform besitzt. Der Durchmesser des Kolbenschaft-Teils entspricht dabei dem Durchmesser des Kolbenboden-Teils. In die dem Kolbenschaft-Teil zugeordnete Stirnseite des Kolbenboden-Teils ist eine Ausnehmung eingeformt, deren Öffnung durch einen umlaufenden, in die Ausnehmung hineinragenden Abschnitt so umgrenzt ist, dass zwischen diesem Abschnitt und der Grundfläche der Ausnehmung eine Hinterschneidung gebildet ist. Zum Zusammenfügen von Kolbenschaft- und Kolbenbodenteil wird zunächst das Kolbenboden-Teil in eine Form gelegt, deren Innendurchmesser dem Außendurchmesser von Kolbenboden- und Kolbenschaft-Teil entspricht. Die Ausnehmung des Kolbenboden-Teils ist der Öffnung der Form zugewandt, während das Kolbenboden-Teil an seiner anderen Stirnseite über einen Stempel abgestützt ist. Anschließend wird das Kolbenschaft-Rohteil in die Form eingeführt, bis sein Vorsprung in der Ausnehmung des Kolbenbodenteils sitzt. Daraufhin wird das Kolbenschaft-Teil mittels eines formgebenden Stempels mit einer Schmiedekraft beaufschlagt, durch die das Material des Kolbenschaft-Teils in die Ausnehmung des Kolbenboden-Teils fließt und die dort gebildete Hinterschneidung füllt. Gleichzeitig erhält das Kolbenschaft-Teil seine becherförmige Endgestalt.

Der gemäß dem Verfahren aus der JP 03-267552 A gefertigte Kolben weist eine im Wesentlichen vollständig zylindrische äußere Gestalt auf. Eng benachbart zu dem vom Kolbenschaft-Teil getragenen Kolbenboden-Teil sind dabei in die Umfangsfläche des Kolbenschaft-Teils Nuten für Kolbenringe eingeformt. Weder das Kolbenschaft-Teil noch das Kolbenboden-Teil weisen dabei zusätzliche Formmerkmale auf, die sie für einen modernen Verbrennungsmotor geeignet machen würden. Insbesondere fehlt dem bekannten Kolben jede besondere Ausgestaltung des Kolbenboden-Teils, wie sie heutzutage zur optimalen Nutzung der Energie des im jeweiligen Verbrennungsmotor verbrannten Kraftstoffs gefordert wird. Auch zeigt sich, dass einfache Kolbenkonstruktionen der in der JP 03-267552 A beschriebenen Art den thermischen Anforderungen nicht gewachsen sind, die sich in modernen Verbrennungsmotoren ergeben.

Vergleichbare Möglichkeiten der Herstellung von Kolben aus zwei Teilen durch eine schmiedetechnisch erzeugte formschlüssige Verbindung dieser Teile sind aus der DE 725 761 C, der JP 54-021945 A, der GB 2 080 485 A oder der US 3,075,817 A1 bekannt. Gemeinsam ist diesem Stand der Technik jedoch ebenfalls, dass die in der bekannten Art und Weise aus zwei Teilen zusammengesetzten Kolben jeweils eine einfache Gestalt aufweisen, die den modernen Anforderungen an Kolben für Verbrennungsmotoren nicht mehr entspricht.

Ausgehend von dem voranstehend erläuterten Stand der Technik lag daher der Erfindung die Aufgabe zu Grunde, ein Verfahren zur Verfügung zu stellen, das die kostengünstige Herstellung von Kolben für Verbrennungsmotoren ermöglicht. Ebenso sollte ein Kolben für Verbrennungsmotoren angegeben werden, der sich bei hoher Fertigungsgenauigkeit kostengünstig herstellen lässt.

In Bezug auf das Verfahren zum Herstellen eines Kolbens für Verbrennungsmotoren aus zwei vorgefertigten Teilen ist diese Aufgabe erfindungsgemäß dadurch gelöst worden, dass bei einem solchen Verfahren die in Anspruch 1 angegebenen Maßnahmen durchgeführt werden. Vorteilhafte Ausgestaltungen des erfindungsgemäßen Verfahrens sind in den auf Anspruch 1 rückbezogenen Ansprüchen angegeben.

In entsprechender Weise ist die oben genannte Aufgabe in Bezug auf einen Kolben für Verbrennungsmotoren, der aus zwei formschlüssig miteinander verbundenen Teilen hergestellt ist, erfindungsgemäß durch den Gegenstand des Anspruchs 12 gelöst worden. Vorteilhafte Ausgestaltungen des erfindungsgemäßen Kolbens sind in den auf Anspruch 12 rückbezogenen Ansprüchen angegeben..

Gemäß der Erfindung wird die Verbindung zwischen den beiden Teilen des Kolbens mit Hilfe einer mechanischen Verbindung bewerkstelligt, bei der das Material des Vorsprungs des einen Teils mit dem die Ausnehmung des anderen Teils umgebenden Material so verklammert wird, dass die beiden Teile unlösbar miteinander verbunden sind. Zu diesem Zweck wird im Bereich der Ausnehmung des einen Teils eine Hinterschneidung gebildet, die nach dem Verpressen der beiden Teile vom in sie hinein fließenden Material des Vorsprungs gefüllt ist. Auf diese Weise ist ein im Wesentlichen durch Formschluss wirkendes mechanisches Sperrsystem gebildet, das den dauerhaft festen Zusammenhalt der beiden Teile des erfindungsgemäß erzeugten Kolbens sichert.

Ein wesentlicher Vorteil der Erfindung besteht dabei darin, dass die einzelnen z. B. aus einem Stahlwerkstoff bestehenden Teile, aus denen der Kolben zusammengesetzt wird, vollständig fertig vorgeformt werden können und die Verbindung zwischen den Teilen ohne zusätzliche Verbindungselemente, wie Schrauben, hergestellt werden kann. Die erfindungsgemäß vorgesehene mechanische Verbindung durch formschlüssig ineinander greifendes Material der beiden Teile ermöglicht es dabei, die mindestens zwei Einzelteile, aus denen ein erfindungsgemäßer Kolben zusammengesetzt wird, präzise vorzuformen. Sie weisen daher bei ihrer Montage zu dem Kolben ein minimiertes Gewicht auf, so dass nur geringe Kräfte für das Werkstückhandling aufgewendet werden müssen. Darüber hinaus ist in Folge dessen, dass durch den erfindungsgemäßen Fügevorgang keine Veränderung der Grundform des Kolbens einhergeht, in der Regel allenfalls nur eine sehr reduzierte mechanische Nachbearbeitung des fertig gefügten Kolbens erforderlich.

Aufgrund dessen, dass die zu einem erfindungsgemäßen Kolben auf erfindungsgemäße Weise zusammengefügten Bauteile insbesondere in Bezug auf die für ihre Verbindung erforderlichen Formelemente einfach gestaltet sein können, lassen sich diese Teile kostengünstig durch Schmieden, insbesondere Warmschmieden, vorfertigen.

In diesem Zusammenhang wirkt es sich besonders vorteilhaft aus, dass die erfindungsgemäße Art und Weise der Verbindung der beiden Kolbenteile es ermöglicht, den Kolben vollständig allein durch Warmschmiedeoperationen herzustellen. So kann neben der Vorfertigung der beiden Kolbenteile durch Warmschmieden auch die an dem einen Teil ausgebildete Hinterschneidung durch Warmschmiedeschritte erzeugt werden.

Dazu kann zunächst mittels eines formgebenden Werkzeugs an dem ersten Teil ein im Wesentlichen entgegen der Wirkrichtung des Werkzeugs gerichteter Vorsprung angeformt werden. Anschließend wird dieser Vorsprung mit einer seitlichen, in Richtung der Aufnahme gerichteten Kraft beaufschlagt, um die Hinterschneidung zu formen. Bei einer solchen zweistufig erfolgenden Herstellung der Hinterschneidung wird zunächst mittels eines geeigneten Schmiedewerkzeugs an das erste Teil ein hinterschneidungsfreier Vorsprung angeformt, von dem das Werkzeug durch eine einfache Hubbewegung wieder getrennt werden kann. Anschließend wird der Vorsprung durch eine seitliche Kraftbeaufschlagung in Richtung der Aufnahme des ersten Teils so geneigt, dass er zwischen seinem freien Ende und dem Boden der Aufnahme einen Winkel von weniger als 90° einschließt. Zusätzliche spanabhebende Bearbeitungen zur Erzeugung der Hinterschneidung können auf diese Weise vermieden werden.

Des Weiteren ist es bei erfindungsgemäßer Herstellweise nicht mehr erforderlich, die Kolbenteile lokal auf Schmelztemperatur zu erwärmen. Die mit einer solchen Erwärmung einhergehende Gefahr von Gefügeveränderungen und der Entstehung von Spannungen im Kolben tritt bei einem erfindungsgemäßen Kolben ebenfalls nicht mehr auf.

Ein anderer wesentlicher Aspekt der Erfindung ist, dass die mindestens zwei Teile durch eine einfache, mit einem Schmiedeschritt vergleichbare Operation miteinander verbunden werden. Die dazu erforderliche Vorrichtung kann einfach und damit kostengünstig konzipiert werden, da im Bereich der Verbindungszone kein besonderes Gesenk oder vergleichbare, den Materialfluss bestimmende und eine Verformung der Bauteile verhindernde Hilfsmittel erforderlich sind, sondern die gewünschte Füllung der Ausnehmung des einen Teils des Kolbens durch das Material des Vorsprungs des anderen Kolbenteils dadurch gewährleistet ist, dass der Vorsprung in die Ausnehmung des anderen Teils gesteckt wird und der mit der anschließenden Druckbeaufschlagung eintretende Materialfluss durch die Form der Ausnehmung selbst bestimmt ist.

Im Ergebnis steht mit der Erfindung somit ein Verfahren zur Verfügung, das auf einfache, kostengünstige Weise die Herstellung von hochpräzise geformten und gleichzeitig hoch belastbaren Kolben für Verbrennungsmotoren ermöglicht. Deren Gestaltung ist dabei so gewählt, dass sie sich mit einfachen Mitteln aus zwei Teilen fügen lassen, ohne dass dazu aufwändige Apparaturen oder übermäßig große Kräfte benötigt werden.

Eine besonders praxisgerechte Ausgestaltung der Erfindung ist **dadurch gekennzeichnet, dass** die Ausnehmung und der Vorsprung jeweils an einer Stirnfläche des ihnen jeweils zugeordneten Teils ausgebildet sind. Bei dieser Ausgestaltung ist lediglich eine in Längsachsrichtung des herzustellenden Kolbens wirkende Presskraft erforderlich, um den gewünschten Materialfluss zu bewirken. Gleichzeitig ist bei dieser Anordnung eine hinsichtlich der im praktischen Einsatz auftretenden Belastungen optimale Verbindung beider Teile des Kolbens gesichert.

Eine besonders einfache Gestaltung der Kolbenteile und eine ebenso einfach ausführbare Variante des erfindungsgemäßen Verfahrens ergeben sich, wenn der eine Teil den Kolbenboden und das andere Teil den Kolbenschaft des herzustellenden Kolbens bildet.

Grundsätzlich ist die Zuordnung von Vorsprung und Ausnehmung zu dem jeweiligen Teil für den mit der Erfindung erzielten Erfolg dabei unerheblich. So kann in solchen Fällen, in denen das eine Teil den Kolbenschaft, an den im praktischen Einsatz das jeweilige Pleuel angekoppelt ist und der den Kolben im Zylinderraum führt, und das andere Teil den Kolbenboden bildet, in dessen vom Kolbenschaft abgewendeter Stirnseite üblicherweise eine Brennraummulde eingeformt ist, der Vorsprung an das Kolbenbodenteil angeformt und die Ausnehmung in das Kolbenschaftteil eingeformt sein. Aus fertigungstechnischer Sicht hat es sich jedoch als besonders praktisch herausgestellt, wenn der Vorsprung dem Kolbenschaft-Teil und die Ausnehmung dem Kolbenboden-Teil zugeordnet ist.

Zur Vereinfachung der bei der Vorfertigung des mit der Ausnehmung versehenen Teils des Kolbens trägt es ebenso bei, wenn die betreffende Ausnehmung eine kreisrunde Öffnung aufweist.

Die im Bereich der Ausnehmung erfindungsgemäß vorgesehene Hinterschneidung lässt sich auf einfache Weise dadurch erzeugen, dass die Öffnung der Ausnehmung eine Öffnungsfläche aufweist, die kleiner ist als die der Öffnung gegenüberliegende projizierte Grundfläche der Ausnehmung. Bei dieser Dimensionierung ist die Öffnungsfläche immer kleiner als die in die Ebene der Öffnungsfläche projizierte Grundfläche. Dies bedeutet, dass in Draufsicht auf die Grundfläche gesehen der Rand der Öffnung gegenüber dem Rand der Grundfläche mindestens abschnittsweise in Richtung der Mitte der Grundfläche versetzt angeordnet ist, so dass sich in den betreffenden Abschnitten beim Übergang des Randes der Öffnung zum Rand der Grundfläche zwangsläufig eine Hinterschneidung bildet. Die Hinterschneidung kann dabei dadurch gebildet werden, dass die die Ausnehmung umgebende Umfangsfläche ausgehend von der Grundfläche der Ausnehmung mindestens abschnittsweise gegen die Öffnungsfläche geneigt ausgerichtet ist.

Grundsätzlich ist es denkbar, die gemeinsam den Kolben bildenden Teile durch eine Kaltumformung miteinander zu verbinden. Eine deutliche Vereinfachung des mit dieser Art der Umformung verbundenen Aufwands kann jedoch dadurch erzielt werden, dass bei der Kraftbeaufschlagung zur Herstellung der formschlüssigen Verbindung zwischen dem ersten und zweiten Teil das mit dem Vorsprung versehene Teil mindestens im Bereich des Vorsprungs auf Schmiedetemperatur erwärmt ist. In diesem Fall wirkt das erste kalte Teil mit seiner Aufnahme als Matrize für die Verformung des in die Aufnahme eingesetzten, Schmiedetemperatur aufweisenden Vorsprungs des zweiten Teils, so dass eine gleichmäßige und vollständige Füllung des Hinterschneidungsbereichs der Aufnahme durch das Material des Vorsprungs bei der in Folge der Kraftbeaufschlagung eintretenden Verformung des Vorsprungs gewährleistet ist.

Die Abstützung des einen Teils am anderen Teil des fertig montierten und gefügten Kolbens kann dadurch unterstützt werden, dass am Übergang des Vorsprungs zum Hauptabschnitt des ihm zugeordneten Teils ein Absatz ausgebildet ist. Auf diesem Absatz kann sich der andere Teil mindestens mit der seine Ausnehmung umgrenzenden Wand abstützen.

Als besonders praxisgerecht erweist sich eine Ausgestaltung der Erfindung, gemäß der die Ausnehmung mindestens abschnittsweise von einem frei vorstehenden Kragenabschnitt umgrenzt ist. Dieser Kragenabschnitt bildet zum einen das Formelement, durch das im Bereich der Ausnehmung die vom Material des Vorsprungs des anderen Teils gefüllte Hinterschneidung ausgebildet ist. Zum anderen kann der im Zuge der Druckbeaufschlagung eintretende Materialfluss so gelenkt werden, dass der Kragenabschnitt eine sichere und dauerhafte Verklammerung beider Teile gewährleistet, indem er vergleichsweise tief in das Material des mit dem Vorsprung versehenen Kolbenteiles greift und das Material des mit dem Vorsprung versehenen Teils den Kragenabschnitt mindestens abschnittsweise umgibt.

Die Sicherheit, mit der die beiden Teile eines erfindungsgemäßen Kolbens auch unter den im Betrieb auftretenden Erwärmungen zusammenhalten, kann bei gleichzeitig unverändert einfacher Montage dadurch optimiert werden, dass das Volumen des Vorsprungs des einen Teils unter Berücksichtigung der Wärmeausdehnung beider Teile derart dimensioniert ist, dass das Material des Vorsprungs auch im abgekühlten Zustand die Ausnehmung des anderen Teils vollständig füllt. Zu diesem Zweck kann die Umfangsform des Vorsprungs des einen Teils an die Form der Öffnung der Ausnehmung des anderen Teils derart angepasst sein, dass der Vorsprung im auf Warmschmiedetemperatur erwärmten Zustand in die Öffnung einschiebbar ist, und dass die Höhe des Vorsprungs größer ist als die Tiefe der Ausnehmung.

Ein wesentlicher Vorteil der Erfindung besteht darin, dass die erfindungsgemäße Art und Weise der Herstellung eines Kolbens es erlaubt, für die beiden Teile, aus denen der Kolben zusammengesetzt ist, jeweils einen Werkstoff auszuwählen, der optimal an die im Betrieb auf das jeweilige Teil wirkenden Belastungen angepasst ist. So ist es durch die Erfindung möglich, bei der Auswahl des jeweiligen Werkstoffs nicht nur die jeweiligen mechanischen Belastungen, sondern auch solche Belastungen zu berücksichtigen, die sich beispielsweise aufgrund der thermischen oder chemischen Einflüsse ergeben, denen ein erfindungsgemäßer Kolben im praktischen Einsatz ausgesetzt ist.

Dementsprechend wird gemäß einer besonders vorteilhaften Ausgestaltung der Erfindung vorgeschlagen, das eine Teil eines erfindungsgemäßen Kolbens aus einem ersten und das andere Teil aus einem zweiten Werkstoff zu fertigen, der sich vom ersten Werkstoff unterscheidet. Abhängig vom jeweiligen Einsatzbereich können demnach beispielsweise das erste Teil aus einer ersten Stahlgüte und das zweite Teil aus einer zweiten Stahlgüte, das erste Teil aus einer Stahlgüte und das zweite Teil aus einem anderen Metallwerkstoff, insbesondere Leichtmetall oder das erste Teil aus einer Keramik und das zweite Teil aus einem Metallwerkstoff vorgefertigt sein. Neben dem Warmschmieden als Vorfertigungsverfahren für Schmiedewerkstoffe kann erfindungsgemäß auch die sintertechnische Vorfertigung zumindest für das Kolbendoden-Teil eingesetzt werden. Das Ausgangsmaterial für das Kolbenboden-Teil ist dann Sintermetallpulver.

Des Weiteren erlaubt es die Erfindung, die einzelnen Teile, aus denen ein Kolben in erfindungsgemäßer Weise zusammengesetzt ist, unter Berücksichtigung der auf das jeweilige Teil in der Praxis wirkenden Belastungen unterschiedlich zu vergüten oder in sonstiger Weise zu behandeln.

Durch die erfindungsgemäße Herstellung und Gestaltung eines Kolbens für Verbrennungsmotoren wird so ein breites Spektrum von Optimierungsmöglichkeiten zur Verfügung gestellt, die es erlauben, einen solchen Kolben jeweils optimal an seinen jeweiligen Einsatzzweck anzupassen.

Nachfolgend wird die Erfindung anhand einer ein Ausführungsbeispiel darstellenden Zeichnung näher erläutert. Es zeigen jeweils schematisch im Längsschnitt:

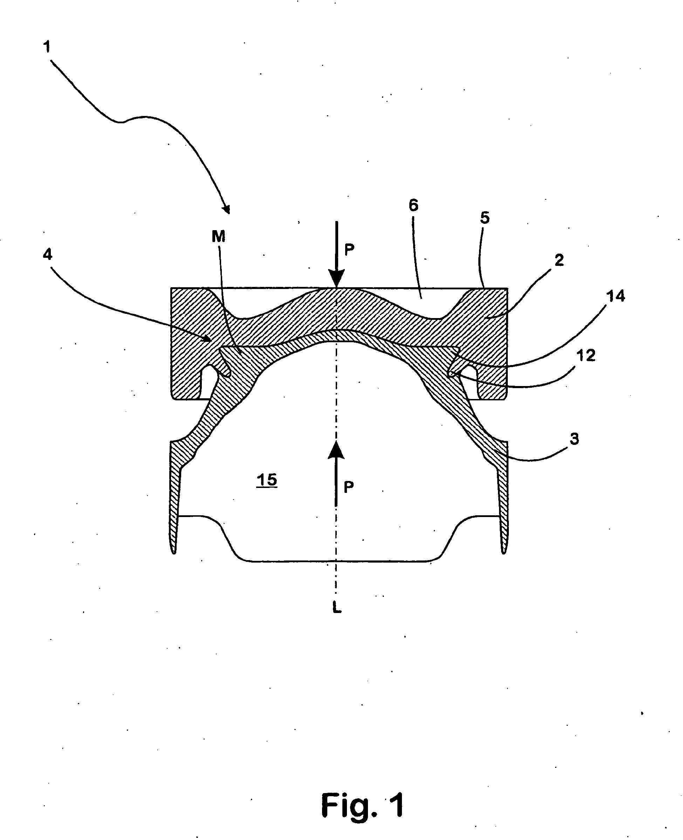

- Fig. 1: einen aus zwei Teilen zusammengesetzten Kolben;

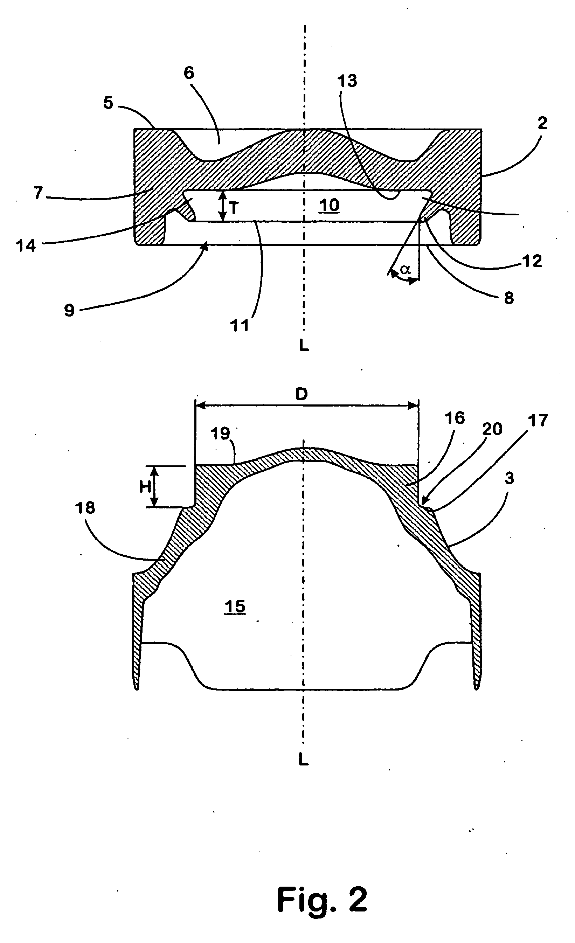

- Fig. 2: die Teile, aus denen der in Fig. 1 dargestellte Kolben zusammengesetzt ist.

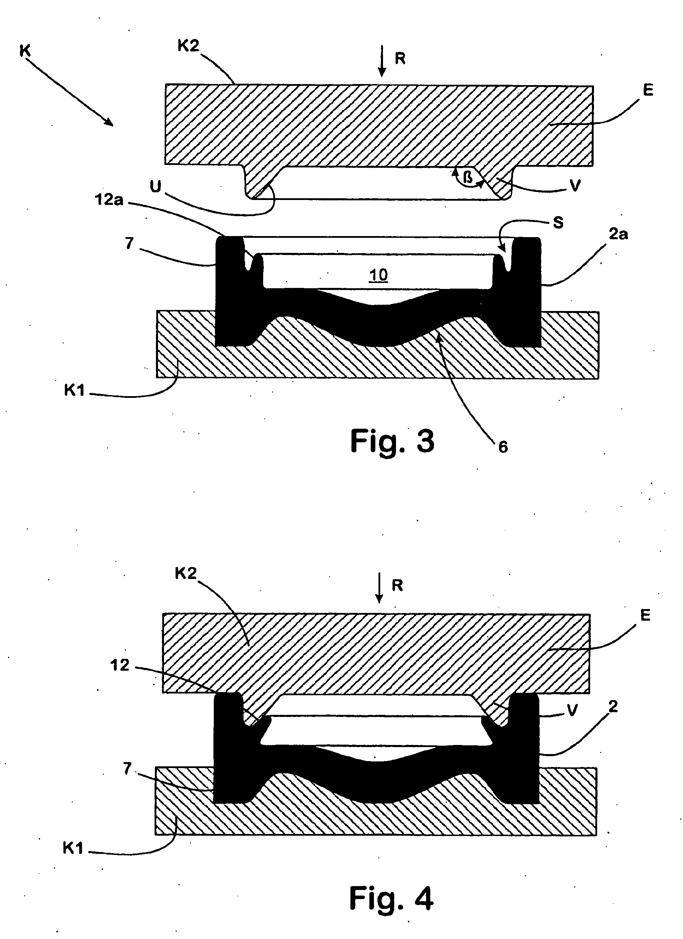

- Fig. 3, Fig. 4: zwei bei der Herstellung des ersten Teils des Kolbens absolvierte Arbeitsschritte.

Der Kolben 1 ist aus einem ersten, seinen Kolbenboden bildenden Kolbenboden-Teil 2 und einem zweiten, seinen Kolbenschaft bildenden Kolbenschaft-Teil 3 zusammengesetzt, die im Bereich einer zwischen dem Kolbenboden-Teil 2 und dem Kolbenschaft-Teil 3 gebildeten Fügezone 4 form- und kraftschlüssig miteinander verbunden sind. Der Kolbenboden-Teil 2, der Kolbenschaft-Teil 3 und auch die form- und kraftschlüssige Verbindung zwischen diesen beiden Teilen 2,3 sind dabei durch Warmschmiedeoperationen hergestellt worden.

Das Kolbenboden-Teil 2 ist aus einem Stahl-Rohling warmschmiedetechnisch hergestellt worden und weist eine scheibenförmige Grundform auf. In diejenige Stirnseite 5 des Kolbenboden-Teils 2, die im praktischen Einsatz einem hier nicht gezeigten Brennraum eines hier ebenso nicht sichtbaren Motorblocks zugeordnet ist, ist eine Brennraummulde 6 eingeformt. An die Stirnseite 5 schließt sich eine in Richtung des Kolbenschaft-Teils 3 weisende Umfangswand 7 an, die eine auf der dem Kolbenschaft-Teil 3 zugeordneten Stirnseite 8 des Kolbenboden-Teils 2 ausgebildete Aufnahme 9 umgibt. In die dem Kolbenschaft-Teil 3 gegenüberliegende Grundfläche der Aufnahme 9 ist eine Ausnehmung 10 eingeformt.

Zur Herstellung des Kolbenboden-Teils 2 wird zunächst aus einem auf Schmiedetemperatur von ca. 1050 °C erwärmten, hier nicht dargestellten Stahl-Rohling durch einfaches Stauchen eine hier ebenfalls nicht gezeigte Vorform erzeugt, aus der dann mittels eines hier auch nicht dargestellten Schmiedewerkzeugs ein Kolbenboden-Rohteil 2a hergestellt wird, dessen Grundform bereits der Form des Kolbenboden-Teils 2 entspricht. Mittels des Schmiedewerkzeugs ist dabei bereits die Ausnehmung 10 in ihrer Rohform in das Kolbenboden-Rohteil 2a eingeformt worden. Gleichzeitig ist von dem Schmiedewerkzeug ein Vorsprung 12a an das Kolbenbodenroh-Teil 2a hinterschneidungsfrei angeformt worden, der die Ausnehmung 10 ringförmig umgibt und entgegen der Wirkrichtung R des hier nicht dargestellten Schmiedewerkzeuges ausgerichtet ist. Die Innenwandfläche der vom Vorsprung 12a umgebenen Ausnehmung 10 ist beim Kolbenboden-Rohteil 2a somit im Wesentlichen zylindrisch ausgebildet.

In einem weiteren warmschmiedetechnischen Arbeitsschritt erfolgte dann die Kalibrierung des Kolbenboden-Rohteils 2a. Dazu ist das Kolbenboden-Rohteil 2a in ein zweiteiliges Kalibrierwerkzeug K eingelegt worden, dessen unteres, der Stirnseite 5 des Kolbenboden-Rohteils 2a zugeordnetes Werkzeugteil K1 die fertige Form der Brennraummulde 6 des Kolbenboden-Teils 2 abbildet. Das obere Werkzeugteil K2 des Kalibrierwerkzeugs K weist dagegen an seiner dem unteren Werkzeugteil K1 zugeordneten Seite einen von einer Platte E getragenen, ringförmig umlaufenden Vorsprung V auf.

Dieser Vorsprung V ist so angeordnet, dass er bei auf dem unteren Werkzeugteil K1 mit seiner Stirnfläche 5 aufliegendem Kolbenboden-Rohteil 2a in den Ringspalt S weist, der zwischen dem Vorsprung 12a und der Umfangswand 7 des Kolbenboden-Rohteils 2a vorhanden ist. Dabei schließt die innere Umfangsfläche U des Vorsprungs V ausgehend von dessen freiem Ende mit der Unterseite der den Vorsprung V tragenden Platte E einen stumpfen Winkel β von 115 - 120° ein, so dass der Vorsprung V im Querschnitt im Bereich seiner an die Platte E angrenzenden Wurzel dicker ist als im Bereich seiner freien Spitze. Gleichzeitig verläuft die äußere Umfangsfläche des Vorsprungs V parallel zur Innenfläche der Umfangswand 7.

Beim Absenken des Kalibrierwerkzeugs K2 greift der Vorsprung V in den Ringspalt S und trifft mit seiner inneren Umfangsfläche U auf den Vorsprung 12a des Kolbenboden-Rohteils 12. Auf diese Weise wird auf den Vorsprung 12a eine seitliche, in die Ausnehmung 10 gerichtete Kraft Q ausgeübt, durch die das Material des Vorsprungs 12a in Richtung der Ausnehmung 10 verdrängt wird.

Sobald das Kalibrierwerkzeug K2 seine tiefste Stellung, an der die Spitze seines Vorsprungs V am Grund des Ringspalts S sitzt, erreicht hat, ist der Vorsprung 12a des Kolbenboden-Rohteils 2a zum Kragenabschnitt 12 geformt, der nun unter einem Winkel α von ca. 25 - 30° gegenüber der Längsachse L des Kolbenbodenteils 12 geneigt angeordnet ist.

Auf diese Weise ist die kreisrunde Öffnung 11 der Ausnehmung 10 von dem umlaufenden und frei in die Aufnahme 9 hineinragenden Kragenabschnitt 12 umgeben, der ausgehend von der ebenfalls kreisrunden Grundfläche 13 der Ausnehmung 10 in Richtung der Längsachse L des Kolbenboden-Teils 2 ausgerichtet ist. Auf diese Weise ist die Grundfläche 13 größer als die von der Öffnung 10 eingenommene Fläche. Gleichzeitig ist im Bereich des zwischen der Grundfläche 13 und dem geneigt angeordneten Kragenabschnitt 12 eingeschlossenen Winkel α eine Hinterschneidung 14 gebildet, die durch eine allein parallel zur Längsachse L erfolgende Bewegung nicht erreicht werden kann.

Das Kolbenschaft-Teil 3 ist ebenfalls durch mehrere Warmschmiedeoperationen aus einem zylindrischen Stahl-Rohling hergestellt worden. Dazu ist der hier nicht gezeigte Rohling zunächst in die Matrize einer hier ebenfalls nicht gezeigten Schmiedevorrichtung gestellt worden, in welchem anschließend in einem ersten Schmiedeschritt mittels eines Stempels ausgehend von der einen Stirnseite des Rohlings eine bezogen auf das Kolbenboden-Teil 2 im fertig montierten Zustand rückwärtige Ausnehmung 15 des Kolbenschaft-Teils 3 eingeformt worden ist. Gleichzeitig ist im Bereich der anderen Stirnseite des Rohlings ein zylindrischer Vorsprung 16 und ein daran stufenlos anschließender, um den Vorsprung 16 umlaufender Absatz 17 geformt worden, deren Form durch die Matrize der Schmiedevorrichtung vorgegeben worden ist. Der derart vorkonturierte Rohling ist dann in einem zweiten Schmiedeschritt fertig geformt worden. Die geometrischen Abmessungen des so erhaltenen Kolbenschaft-Teils 3 entsprechen bis auf geringe Abweichungen dem geforderten Endmaß, so dass am Kolbenschaft-Teil 3 nur noch geringfügige mechanische Nachbearbeitungen durchgeführt werden müssen ("Near Net Shape-Fertigung").

Beim derart fertig gestellten Kolbenschaft-Teil 3 ist auf der zur Ausnehmung 14 gegenüberliegenden Stirnseite der Vorsprung 16 ausgebildet, der über den Absatz 17 stufenlos in den Hauptabschnitt 18 des Kolbenschaft-Teils 3 übergeht. Der Hauptabschnitt 18 besteht im Wesentlichen aus einer umlaufenden Wand, in die unter anderem die hier nicht sichtbaren Lageröffnungen für ein Pleuel des Verbrennungsmotors eingeformt sind, für den der Kolben 1 bestimmt ist. Der Durchmesser D des Vorsprungs 16 entspricht dabei bis auf ein Untermaß dem Durchmesser der Öffnung 11 der Ausnehmung 10 des Kolbenboden-Teils 2, so dass der Vorsprung 16 mit geringem Spiel in die Ausnehmung 10 des Kolbenboden-Teils 2 eingeführt werden kann. Der Übergang des Vorsprungs 16 zur Stirnfläche 19 ist kontinuierlich und sprungfrei, d. h. ohne einen rechtwinkligen Absatz ausgebildet. Diese Gestaltung erleichtert das Einführen des Vorsprungs 16 in die Ausnehmung 10.

Um das Einführen des Vorsprungs 16 zusätzlich zu vereinfachen und gleichzeitig eine besonders genaue Ausrichtung von Kolbenboden-Teil 2 und Kolbenschaft-Teil 3 zu ermöglichen, kann der Vorsprung 16 ausgehend vom Absatz 17 in Richtung seiner freien Stirnfläche 19 leicht konisch zulaufend ausgebildet sein.

Die Höhe H des Vorsprungs 16 ist dabei größer als die Tiefe T der Ausnehmung 10. Dabei sind die Abmessungen des Vorsprungs 16 des Kolbenschaft-Teils 3 insgesamt so auf die Abmessungen der Ausnehmung 10 des Kolbenboden-Teils 2 unter Berücksichtigung eines Volumenanteils Vk abgestimmt, um den das Volumen des Vorsprungs 16 bei seiner Abkühlung nach dem Verbinden des Kolbenschaft-Teils 3 mit dem Kolbenboden-Teil 2 schrumpft. Bei aus Stahl gefertigten Kolbenschaft- 3 und Kolbenboden-Teilen 2 ergibt sich dieser Volumenzusatz Vk bei einem Volumen V1 der mit dem Material des Vorsprungs 16 zu füllenden Ausnehmung 10 zu Vk = V1 x 0,014.

Um eine unter allen Temperaturbedingungen dauerhaft feste Verbindung zwischen den Teilen 2 und 3 zu gewährleisten, beträgt daher das Volumen V2 des Vorsprungs 16 V2 = V1 + Vk, wobei das zusätzliche Volumen Vk insbesondere im Bereich des Vorsprungs 16 angeformt ist, der nach dem Fügen von Kolbenschaft- 3 und Kolbenboden-Teil 2 dem Kragenabschnitt 12 des Kolbenboden-Teils 2 zugeordnet ist.

Zum Verbinden des Kolbenboden-Teils 2 mit dem Kolbenschaft-Teil 3 wird zunächst das Kolbenschaft-Teil 3 auf Schmiedetemperatur von ca. 1050 °C erwärmt, während das Kolbenboden-Teil 2 bei Raumtemperatur verbleibt.

Dann werden die beiden Teile 2,3 in entsprechend geformte Aufnahmen einer hier nicht gezeigten Pressvorrichtung so positioniert, dass ihre Längsachsen L fluchten und der Vorsprung 16 des Kolbenschaft-Teils 3 und die Ausnehmung 10 des Kolbenboden-Teils 2 aufeinander zu weisen. Anschließend werden die Teile 2,3 gegeneinander bewegt, bis die freie Stirnfläche 19 an die Grundfläche 13 der Ausnehmung 10 stößt. Daraufhin wird eine in Richtung der Längsachse L wirkende Druckkraft P auf das Kolbenboden-Teil 2 und/oder das Kolbenschaft-Teil 3 ausgeübt. Diese ist so groß, dass das auf Schmiedetemperatur erwärmte Material M des Vorsprungs 16 des Kolbenschaft-Teils 3 in den bis dahin im Bereich der Hinterschneidung 14 noch freien Raum der Ausnehmung 10 fließt.

Der Pressvorgang wird fortgesetzt, bis der freie Rand des Kragenabschnitts 12 in der Kehle 20 sitzt, in der der Vorsprung 16 in den angrenzenden Absatz 17 des Kolbenschaft-Teils 3 übergeht. In diesem Zustand füllt das Stahlmaterial des Vorsprungs 16 die Ausnehmung 10 einschließlich der Hinterschneidung 14 vollständig. Durch das den Kragenabschnitt 12 hintergreifende Material des Vorsprungs 16 ist das Kolbenboden-Teil 2 nun formschlüssig mit dem Kolbenschaft-Teil 3 verbunden.

Die in Folge des zusätzlichen Volumens Vk des Vorsprungs 16 bewirkte Überfüllung der Ausnehmung 10 wird dabei durch eine elastische Verformung des Kragenabschnitts 12 kompensiert. Der derart verformte Kragenabschnitt 12 bewegt sich bei der Abkühlung in Richtung seiner ursprünglichen Form zurück, so dass der durch die Füllung der Ausnehmung 10 gebildete Formschluss durch einen Kraftschluss ergänzt wird, der durch das Ineinandergreifen und die elastische Rückfederung des nicht bzw. nur unvollständig plastisch verformten Kragenabschnitts 12 und des Materials des Vorsprungs 16 bewirkt wird.

Da der Randbereich des Kragenabschnitts 12 leicht in das Material des Kolbenschaft-Teils 3 eintaucht, ist das Kolbenboden-Teil 2 gleichzeitig über den Kragenabschnitt 12 auf dem Absatz 17 so abgestützt, dass auch bei ungünstig verteilten Belastungen im Bereich der Brennraummulde 6 eine gleichmäßige Kraftübertragung vom Kolbenboden-Teil 2 auf das Kolbenschaft-Teil 3 gewährleistet ist.

Grundsätzlich können zum Verbinden des Kolbenbodenteils 2 mit dem Kolbenschaft-Teil 3 beide Teile auf Warmschmiedetemperatur erwärmt werden. Es ist jedoch ausreichend, wenn lediglich das Kolbenschaft-Teil 3 oder sogar nur der Vorsprung 16 des Kolbenschaft-Teils 3 auf Warmschmiedetemperatur erwärmt wird, während die Temperatur des Koblenboden-Teils 2 nicht gezielt erhöht wird. Unabhängig davon, ob der Vorsprung 16 alleine oder gemeinsam mit dem gesamten Kolbenschaft-Teil 3 erwärmt wird, wirkt in diesem Fall die Ausnehmung 10 des Kolbenboden-Teils im Sinne einer Formmatrize für die zum Verbinden von Kolbenschaft- 3 und Kolbenboden-Teil 2 erforderliche Umformung des Vorsprungs 16 des Kolbenschaft-Teils 3. Das Kolbenboden-Teil 2 kann bei diesem Umformschritt dann im unteren Werkzeugteil K1 verbleiben. Auf diese Weise kann das untere Werkzeugteil K1 nicht nur zum Kalibrieren des Kolbenboden-Rohteils 2a, sondern auch als Werkzeug zum Verbinden des Kolbenboden- 2 mit dem Kolbenschaft-Teil 3 genutzt werden. Auf diese Weise lassen sich die Werkzeugkosten reduzieren und es ist auch keine Umrüstung des Schmiedewerkzeugs zwischen den einzelnen Arbeitsgängen erforderlich, was sich insgesamt günstig auf die Herstellkosten auswirkt.

### BEZUGSZEICHEN

1 Kolben
2 Kolbenboden-Teil
2a Kolbenboden-Rohteil
3 Kolbenschaft-Teil
4 Fügezone
5 Stirnseite des Kolbenboden-Teils 2 und des Kolbenboden-Rohteils 2a
6 Brennraummulde
7 Umfangswand des Kolbenboden-Teils 2 und des Kolbenboden-Rohteils 2a
8 zweite Stirnseite des Kolbenboden-Teils 2
9 Aufnahme des Kolbenboden-Teils 2
10 Ausnehmung
11 Öffnung der Ausnehmung 10
12 Kragenabschnitt
12a Vorsprung des Kolbenbodenroh-Teils 2a
13 Grundfläche der Ausnehmung 10
14 Hinterschneidung
15 rückwärtige Ausnehmung des Kolbenschaft-Teils 3
16 Vorsprung
17 Absatz
18 Hauptabschnitt des Kolbenschaft-Teils 3
19 Stirnfläche des Vorsprungs 16
20 Kehle am Übergang vom Vorsprung 16 zum Absatz 17

α,β Winkel
D Durchmesser des Vorsprungs 16
E Platte
H Höhe des Vorsprungs 16
K1 unteres Werkzeugteil des Kalibrierwerkzeugs K
K2 oberes Werkzeugteil des Kalibrierwerkzeugs K
K Kalibrierwerkzeug
L Längsachse des Kolbens 1 und der Teile 2,3
M Material des Vorsprungs 16
P Druckkraft
R Wirkrichtung des Schmiedewerkzeuges
T Tiefe der Ausnehmung 10
V Vorsprung des Werkzeugteils K1
S Ringspalt
U innere Umfangsfläche des Vorsprungs V
Q Kraft

## Patentansprüche

1. Verfahren zum Herstellen eines Kolbens (1) für Verbrennungsmotoren
- bei dem ein erstes Teil (2) durch Warmschmieden vorgefertigt und bei dieser Vorfertigung an dem ersten Teil (2) eine Ausnehmung (10) ausgebildet wird, die mindestens eine Hinterschneidung (14) aufweist, indem mittels eines formgebenden Werkzeugs an dem ersten Teil (2) ein im Wesentlichen entgegen der Wirkrichtung des Werkzeugs gerichteter Vorsprung (12) angeformt wird, der anschließend mit einer seitlichen, in Richtung der Ausnehmung (10) gerichteten Kraft beaufschlagt wird, um die Hinterschneidung (14) zu formen,
- bei dem ein zweites Teil (3) durch Warmschmieden vorgefertigt wird und an diesem zweiten Teil (3) ein Vorsprung (16) ausgebildet wird, dessen Abmessungen so an die Abmessungen der Ausnehmung (10) angepasst sind, dass der Vorsprung (16) frei in die Ausnehmung (10) des ersten Teils (2) einschiebbar ist und sein Volumen mindestens gleich dem von der Ausnehmung (10) umgebenen Volumen ist,
- bei dem die beiden Teile (2,3) zusammengefügt werden, so dass der Vorsprung (16) des einen Teils (3) in die Ausnehmung (10) des anderen Teils (2) greift, und
- bei dem die beiden zusammengefügten Teile (2,3) mit einer Druckkraft beaufschlagt werden, die so groß und so ausgerichtet ist, dass das Material des Vorsprungs (16) des einen Teils (3) in die Ausnehmung (10) des anderen Teils (2) fließt und sie vollständig füllt, um die Teile (2,3) formschlüssig zu verbinden.

2. Verfahren nach Anspruch 1, **dadurch gekennzeichnet, dass** die Ausnehmung (10) und der Vorsprung (16) jeweils an einer Stirnfläche des ihnen jeweils zugeordneten Teils (2,3) ausgebildet sind.

3. Verfahren nach einem der voranstehenden Ansprüche,
**dadurch gekennzeichnet, dass** das eine Teil (2) den Kolbenboden und das andere Teil (3) den Kolbenschaft des herzustellenden Kolbens (1) bildet.

4. Verfahren nach Anspruch 3, **dadurch gekennzeichnet, dass** der Vorsprung (16) dem Kolbenschaft-Teil (3) und die Ausnehmung (10) dem Kolbenboden-Teil (2) zugeordnet ist.

5. Verfahren nach einem der voranstehenden Ansprüche,
**dadurch gekennzeichnet, dass** die Ausnehmung (10) eine kreisrunde Öffnung (11) aufweist.

6. Verfahren nach einem der voranstehenden Ansprüche,
**dadurch gekennzeichnet, dass** die Öffnung (11) der Ausnehmung (10) eine Öffnungsfläche aufweist, die kleiner ist als die der Öffnung gegenüberliegende projizierte Grundfläche (13) der Ausnehmung (10).

7. Verfahren nach Anspruch 6, **dadurch gekennzeichnet, dass** die die Ausnehmung (10) umgebende Umfangsfläche zur Ausbildung der Hinterschneidung (14) ausgehend von der Grundfläche (13) mindestens abschnittsweise gegen die Öffnungsfläche (11) geneigt ausgerichtet ist.

8. Verfahren nach einem der voranstehenden Ansprüche,
**dadurch gekennzeichnet, dass** bei der Kraftbeaufschlagung zur Herstellung der formschlüssigen Verbindung zwischen dem ersten und zweiten Teil (2,3) das mit dem Vorsprung (16) versehene Teil (3) mindestens im Bereich des Vorsprungs (16) auf Schmiedetemperatur erwärmt ist.

9. Verfahren nach einem der voranstehenden Ansprüche,
**dadurch gekennzeichnet, dass** die Wirkrichtung der Druckkraft (P) koaxial zur Längsrichtung des Vorsprungs (16) und der Ausnehmung (10) ausgerichtet ist.

10. Verfahren nach einem der voranstehenden Ansprüche,
**dadurch gekennzeichnet, dass** das Volumen des Vorsprungs (16) des einen Teils (3) unter Berücksichtigung der Wärmeausdehnung beider Teile (2,3) derart dimensioniert ist, dass das Material des Vorsprungs (16) auch im abgekühlten Zustand die Ausnehmung (10) des anderen Teils (2) vollständig füllt.

11. verfahren nach Anspruch 10, **dadurch gekennzeichnet, dass** die Umfangsform des Vorsprungs (16) des einen Teils (3) an die Form der Öffnung (11) der Ausnehmung (10) des anderen Teils (2) derart angepasst ist, dass der Vorsprung (16) im auf Warmschmiedetemperatur erwärmten Zustand in die Öffnung (11) einschiebbar ist, und **dass** die Höhe (H) des Vorsprungs (16) rößer ist als die Tiefe (T) der Ausnehmung (10).

12. Kolben für Verbrennungsmotoren, hergestellt aus zwei formschlüssig miteinander verbundenen, durch Warmschmieden hergestellten Teilen (2,3), wobei an dem einen Teil (2) eine mindestens eine Hinterschneidung (14) aufweisende Ausnehmung (10) ausgebildet ist, die mindestens abschnittsweise von einem frei vorstehenden Kragenabschnitt (12) umgrenzt ist und die zur Herstellung des Formschlusses von Material eines an dem anderen Teil (3) ausgebildeten Vorsprungs (16) im Wesentlichen vollständig gefüllt ist, **dadurch gekennzeichnet, dass** zwischen Kragenabschnitt (12) und der Umfangswand (7) des Kolbenboden-Teils (2) ein umlaufender Freiraum vorhanden ist.

13. Kolben nach Anspruch 12, **dadurch gekennzeichnet, dass** die Ausnehmung (10) und der Vorsprung (16) jeweils an einer Stirnfläche des ihnen jeweils zugeordneten Teils (2,3) ausgebildet sind.

14. Kolben nach einem der Ansprüche 12 oder 13, **dadurch gekennzeichnet, dass** der eine Teil (2) seinen Kolbenboden und das andere Teil (3) seinen Kolbenschaft bildet.

15. Kolben nach Anspruch 14, **dadurch gekennzeichnet, dass** der Vorsprung (16) dem Kolbenschaft-Teil (3) und die Ausnehmung (10) dem Kolbenboden-Teil (2) zugeordnet ist.

16. Kolben nach einem der Ansprüche 12 bis 15, **dadurch gekennzeichnet, dass** die Ausnehmung (10) eine kreisrunde Öffnung (11) aufweist.

17. Kolben nach einem der Ansprüche 12 bis 16, **dadurch gekennzeichnet, dass** die Öffnung (11) der Ausnehmung (10) eine Öffnungsfläche aufweist, die kleiner ist als die der Öffnung gegenüberliegende projizierte Grundfläche (13) der Ausnehmung (10).

18. Kolben nach Anspruch 17, **dadurch**
**gekennzeichnet, dass** die die Ausnehmung (10) umgebende Umfangsfläche zur Ausbildung der Hinterschneidung (14) ausgehend von der Grundfläche (13) mindestens abschnittsweise gegen die Öffnungsfläche geneigt ausgerichtet ist.

19. Kolben nach einem der Ansprüche 12 bis 18, **dadurch gekennzeichnet, dass** am Übergang des Vorsprungs (16) zum Hauptabschnitt (18) des ihm zugeordneten Teils (3) ein Absatz (17) ausgebildet ist.

20. Kolben nach einem der Ansprüche 12 bis 19, **dadurch gekennzeichnet, dass** das Material des mit dem Vorsprung (16) versehenen Teils den Kragenabschnitt (12) mindestens abschnittsweise umgibt.

21. Kolben nach einem der Ansprüche 12 bis 20, **dadurch gekennzeichnet, dass** das eine Teil (2) aus einem ersten und das andere Teil (3) aus einem zweiten, sich vom ersten Werkstoff unterscheidenden Werkstoff besteht.

## Claims

1. Method for producing a piston (1) for internal combustion engines
- in which a first part (2) is prefabricated by hot-forging and during this prefabrication a recess (10) is formed on the first part (2), which recess (10) has at least one undercut (14), by forming a protrusion (12), which is essentially aligned against the effective direction of the tool, onto the first part (2) by means of a shaping tool, which protrusion (12) subsequently has a force applied to it, which is aligned transversely in the direction of the recess (10), in order to form the undercut (14),
- in which a second part (3) is prefabricated by hot-forging and a protrusion (16) is formed on this second part (3), the dimensions of which are adapted to the dimensions of the recess (10) such that the protrusion (16) can be freely inserted into the recess (10) of the first part (2) and its volume is at least equal to the volume enclosed by the recess (10),
- in which the two parts (2, 3) are joined together, so that the protrusion (16) of the one part (3) engages into the recess (10) of the other part (2) and
- in which the two joined parts (2, 3) have a compressive force applied to them which is so great and aligned in such a way that the material of the protrusion (16) of the one part (3) flows into the recess (10) of the other part (2) and fully fills it, in order to connect the parts (2, 3) in a form-fitting manner.

2. Method according to Claim 1, **characterised in that** the recess (10) and the protrusion (16) are in each case formed on a front face of the part (2, 3) allocated to them respectively.

3. Method according to any one of the preceding claims, **characterised in that** the one part (2) forms the piston head and the other part (3) forms the piston skirt of the piston (1) to be produced.

4. Method according to Claim 3, **characterised in that** the protrusion (16) is allocated to the piston skirt part (3) and the recess (10) is allocated to the piston head part (2).

5. Method according to any one of the preceding claims, **characterised in that** the recess (10) has a circular opening (11).

6. Method according to any one of the preceding claims, **characterised in that** the opening (11) of the recess (10) has an opening area which is smaller than the projected base area (13) of the recess (10) opposite the opening.

7. Method according to Claim 6, **characterised in that** the peripheral area, which encloses the recess (10), for forming the undercut (14) starting from the base area (13) is aligned inclined at least in sections towards the opening area (11).

8. Method according to any one of the preceding claims, **characterised in that** the part (3) provided with the protrusion (16) is heated, at least in the region of the protrusion (16), to forging temperature when force is applied for producing the form-fitting connection between the first and second parts (2, 3).

9. Method according to any one of the preceding claims, **characterised in that** the effective direction of the compressive force (P) is aligned coaxially to the longitudinal direction of the protrusion (16) and the recess (10).

10. Method according to any one of the preceding claims, **characterised in that** the volume of the protrusion (16) of the one part (3), by taking into account the thermal expansion of both parts (2, 3), is dimensioned such that the material of the protrusion (16) also in the cooled state fully fills the recess (10) of the other part (2).

11. Method according to Claim 10, **characterised in that** the peripheral shape of the protrusion (16) of the one part (3) is adapted to the shape of the opening (11) of the recess (10) of the other part (2) in such a way that the protrusion (16), in its state in which it is heated to hot-forging temperature, can be inserted into the opening (11), and **in that** the height (H) of the protrusion (16) is greater than the depth (T) of the recess (10).

12. Piston for internal combustion engines, produced from two parts (2, 3), which are connected to one another in a form-fitting manner and produced by hot-forging, wherein a recess (10) having at least one undercut (14) is formed on the one part (2), which at least in sections is delimited by a freely projecting collar section (12) and which is essentially fully filled to produce the form-fit of material of a protrusion (16) formed on the other part (3), **characterised in that** a circumferential clearance is present between the collar section (12) and the peripheral wall (7) of the piston head part (2).

13. Piston according to Claim 12, **characterised in that** the recess (10) and the protrusion (16) are in each case formed on a front face of the part (2, 3) allocated to them respectively.

14. Piston according to either of Claims 12 and 13, **characterised in that** the one part (2) forms its piston head and the other part (3) forms its piston skirt.

15. Piston according to Claim 14, **characterised in that** the protrusion (16) is allocated to the piston skirt part (3) and the recess (10) is allocated to the piston head part (2).

16. Piston according to any one of Claims 12 to 15, **characterised in that** the recess (10) has a circular opening (11).

17. Piston according to any one of Claims 12 to 16, **characterised in that** the opening (11) of the recess (10) has an opening area which is smaller than the projected base area (13) of the recess (10) opposite the opening.

18. Piston according to Claim 17, **characterised in that** the peripheral area, enclosing the recess (10), for forming the undercut (14) starting from the base area (13) is aligned inclined at least in sections towards the opening area.

19. Piston according to any one of Claims 12 to 18, **characterised in that** a shoulder (17) is formed at the transition from the protrusion (16) to the main section (18) of the part (3) allocated to it.

20. Piston according to any one of Claims 12 to 19, **characterised in that** the material of the part provided with the protrusion (16) at least in sections encloses the collar section (12).

21. Piston according to any one of Claims 12 to 20, **characterised in that** the one part (2) consists of a first material and the other part (3) consists of a second material which differs from the first material.

## Revendications

1. Procédé de fabrication d'un piston (1) pour moteurs à combustion interne,
- dans lequel une première pièce (2) est préfabriquée par forgeage à chaud et une cavité (10), qui présente au moins une contre-dépouille (14), est pratiquée, au cours de cette préfabrication, dans ladite première pièce (2), par réalisation, au moyen d'un outil de formage, d'une saillie (12), qui essentiellement dirigée à l'opposé de la direction effective de l'outil, est soumise ensuite à une force latérale, dirigée dans la direction de la cavité (10), pour former la contre-dépouille (14),
- dans lequel une deuxième pièce (3) est préfabriquée par forgeage à chaud, et une saillie (16) est formée sur cette deuxième pièce (3), les dimensions de cette saillie étant adaptées aux dimensions de la cavité (10) de sorte que la saillie (16) puisse être insérée librement dans la cavité (10) de la première pièce (2), et son volume étant au moins égal à celui ceint par la cavité (10),
- dans lequel les deux pièces (2, 3) sont assemblées de sorte que la saillie (16) de l'une (3) des pièces s'engage dans la cavité (10) de l'autre pièce (2), et
- dans lequel les deux pièces (2, 3) assemblées sont soumises à une force de pression, qui est si élevée et dont l'orientation est telle que la matière de la saillie (16) de l'une (3) des pièces coule dans la cavité (10) de l'autre pièce (2) et la remplisse complètement, afin de relier les pièces (2, 3) par emboîtement.

2. Procédé selon la revendication 1, **caractérisé en ce que** la cavité (10) et la saillie (16) sont formées chacune sur une surface frontale de la pièce (2, 3) qui leur est respectivement associée.

3. Procédé selon l'une des revendications précédentes, **caractérisé en ce que** l'une (2) des pièces forme le fond et l'autre pièce (3) la tige du piston (1) devant être fabriqué.

4. Procédé selon la revendication 3, **caractérisé en ce que** la saillie (16) est associée à la partie (3) qui forme le fond de piston et la cavité (10) à la partie (2) qui forme la tige de piston.

5. Procédé selon l'une des revendications précédentes, **caractérisé en ce que** la cavité (10) présente une ouverture (11) circulaire.

6. Procédé selon l'une des revendications précédentes, **caractérisé en ce que** l'ouverture (11) de la cavité (10) présente une surface d'ouverture qui est plus petite que la surface de base projetée (13), opposée à l'ouverture de la cavité (10).

7. Procédé selon la revendication 6, **caractérisé en ce que** la surface périphérique, qui entoure la cavité (10), évolue obliquement, à partir de la surface de base (13), au moins par sections, en direction de la surface d'ouverture (11), pour former la contre-dépouille (14).

8. Procédé selon l'une des revendications précédentes, **caractérisé en ce que**, lors de l'application de la force pour la réalisation de la liaison par emboîtement de la première et de la deuxième pièce (2,3), la pièce (3), pourvue de la saillie (16), est chauffée à la température de forgeage, au moins dans la zone de la saillie (16).

9. Procédé selon l'une des revendications précédentes, **caractérisé en ce que** la direction effective de la force de pression (P) est coaxiale à la direction longitudinale de la saillie (16) et de la cavité (10).

10. Procédé selon l'une des revendications précédentes, **caractérisé en ce que** le volume de la saillie (16) de l'une (3) des pièces, est calculé, compte tenu de la dilatation thermique des deux pièces (2, 3), de sorte que la matière de la saillie (16) remplisse complètement la cavité (10) de l'autre pièce (2), même à l'état refroidi.

11. Procédé selon la revendication 10, **caractérisé en ce que** la forme périphérique de la saillie (16) de l'une (3) des pièces est adaptée à la forme de l'ouverture (11) de la cavité (10) de l'autre pièce (2) de sorte que la saillie (16), à l'état chauffé à la température de forgeage à chaud, puisse être introduite dans l'ouverture (11) et que la hauteur (H) de la saillie (16) soit supérieure à la profondeur (T) de la cavité (10).

12. Piston pour moteurs à combustion interne composé de deux pièces (2, 3) fabriquées par forgeage à chaud et reliées ensemble par emboîtement, une cavité (10), qui, présentant au moins une contre-dépouille (14), étant formée dans l'une (2) des pièces et limitée, au moins par sections, par une zone en forme de collerette (12) en saillie libre, et étant remplie sensiblement complètement avec la matière d'une saillie (16), formée sur l'autre pièce (3), pour la réalisation d'un emboîtement de matériau, **caractérisé en ce qu'**un espace libre, continu existe entre la zone en forme de collerette (12) et la paroi périphérique (7) de la pièce (2) formant le fond du piston.

13. Piston selon la revendication 12, **caractérisé en ce que** la cavité (10) et la saillie (16) sont formées chacune sur une surface frontale de la pièce (2, 3), qui leur est respectivement associée.

14. Piston selon l'une des revendications 12 ou 13, **caractérisé en ce que** l'une (2) des pièces forme le fond du piston et l'autre pièce (3) la tige de celui-ci.

15. Piston selon la revendication 14, **caractérisé en ce que** la saillie (16) est associée à la pièce (3) formant la tige du piston et la cavité (10) à la pièce (2) formant le fond du piston.

16. Piston selon l'une des revendications 12 à 15, **caractérisé en ce que** la cavité (10) présente une ouverture (11) circulaire.

17. Piston selon l'une des revendications 12 à 16, **caractérisé en ce que** l'ouverture (11) de la cavité (10) présente une surface d'ouverture qui est plus petite que la surface de base projetée (13), opposée à l'ouverture de la cavité (10)

18. Piston selon la revendication 17, **caractérisé en ce que** la surface périphérique, qui entoure la cavité (10), évolue obliquement, à partir de la surface de base (13), au moins par sections, en direction de la surface d'ouverture, pour former la contre-dépouille (14).

19. Piston selon l'une des revendications 12 à 18, **caractérisé en ce que**, dans la zone de transition entre la saillie (16) et la section principale (18) de la pièce (3), qui lui est associée, est formé un gradin (17).

20. Piston l'une des revendications 12 à 19, **caractérisé en ce que** la matière de la pièce pourvue de la saillie (16) entoure, au moins par sections, la zone en forme de collerette (12).

21. Piston selon l'une des revendications 12 à 20, **caractérisé en ce que** l'une (2) des pièces consiste en une première matière et l'autre pièce (3) en une deuxième matière, qui diffère de la première matière.
